# EUROPEAN PATENT SPECIFICATION

(11) **EP 2 071 102 B1**
(45) Date of publication and mention of the grant of the patent: **15.01.2014**
(21) Application number: 08425576.9
(22) Date of filing: 27.08.2008
(51) Int. Cl.: E04H 12/24, F24J 2/52, H01L 31/042

(54) **A hanging structure supporting photovoltaic panels**
Struktur zum Tragen von photovoltaischen Paneelen
Ensemble de support de panneaux photovoltaiques

(30) Priority: 13.12.2007 IT RM20070639
(43) Date of publication of application: 17.06.2009
(73) Proprietor: Autostrade per L'Italia S.p.A., 00159 Roma (IT)
(72) Inventor: Di Taddeo, Fulvio, 64100 Teraho (IT); Mollo, Riccardo, 00127 Roma (IT); Senatori, Alessandro, 50142 Firenze (IT)
(74) Representative: Narcisi, Antonio

(56) References cited:
- EP-A2- 0 993 051
- EP-A2- 1 626 140
- WO-A1-88/03635
- DE-U1- 8 900 621
- DE-U1- 20 319 065
- ES-A1- 2 281 990
- ES-U- 1 064 946
- JP-U- 61 192 461
- US-A- 4 890 599

## Description

### Technical Field

The present invention relates to the construction of structures used to shade an area, more specifically to shade parking lots for motor vehicles. In particular, it aims at providing hanging structures (cantilever roofs) preferably made of metallic parts, used both for casting a shadow on these areas and for producing clean energy.

### Background art

Presently, various devices and manufactured articles are known which allow to shade areas used as parking places or stopover areas for persons and vehicles. The most common structures of this kind are the "hanging structures", usually named "cantilever roofs" or "shelters", since they are realised with a single, vertical supporting element, while the horizontal part is connected to said element in a cantilevered manner, above the shaded area. Other types of structures used to shade areas include parts in the form of frames or lattice (or grid) structures, which are
however utilised to support "light" coverings or cloths only for the purpose of providing protection from sunrays.

In said areas to be shaded, the sunlight obviously has a high intensity for longer periods during the year.

Till now, almost all hanging structures of parking lots or the like, only had the function of protecting from sunrays and/or rain or snow.

PCT/US87/02748 (WO 88/ 03635) relates to an improved solar energy tracking structure, including a base for supporting the remaining elements of the assembly, an azimuth end elevation drive mechanism, a moving structure frame, a plurality of energy collecting elements, a first spoiler and a second spoiler. The technical problem considered by the invention disclosed in that document was how to reduce the torque loading forces due to wind on the translating portion of this tracking structure. Thus, the problem is solved by mounting a wind spoiler assembly to the translating means for collecting radiant solar energy, to reduce the incident torque load placed upon the solar collecting means by the wind (according to claim 1 of that document).

However, as in any other solar tracking unit, the drive mechanism (including an azimuth drive motor and associated azimuth drive gearing which are said to be already well-known in the previous background art at page 7 of PCT/US87/02748) requires maintenance. Similarly, also the elevation motor and gearing, require maintenance, thereby increasing operation costs.

Moreover, this structure is unsuited for use as a shelter structure for automotive vehicles. On the other hand, EP 1 626 140 A2 (closest prior art for the present application) discloses a shelter structure for motor vehicles in a parking area, comprising a photovoltaic generator for generating an electrical current when it is exposed to the sun. In this shelter structure the canopy defining the cover for a parking area is distinct from the photovoltaic generator, and this increases the number of components. A further complication arises from the big size of the first support means which forms a base, a post, and an upper cross member. However, notwithstanding the big size of the first support means no provisions are taken/described in order to reduce the inevitable transportation difficulties to the installation place, e.g. by providing a modular structure of this first support means, or by rendering it foldable/articulated.

Moreover, the embodiments disclosed in EP 1 626 140 A2 do not include merely mechanical parts apt to adjust exposure to sunlight according to a specific installation place; instead, these embodiments include a control unit, electric motors to adjust the exposure to sunlight, and related pneumatic pistons or electromechanical linear actuators, all of which requires periodic maintenance and possibly a more complex installation procedure.

An object of the present invention is to provide a hanging structure having a simple construction, simple installation procedure, and which also has the function of producing energy from incident sunrays.

A further object of the present invention is to allow an assembling and adjustment (regulation) of the components of the hanging structure, in a manner to insure optimisation of the amount of solar energy converted into electric energy.

Still a further object concerns the adaptation/optimisation of standard elements, already known by themselves in the art, in order to reduce the hanging structure's production costs.

### Disclosure of Invention

The objects of the present invention are attained by providing a hanging structure (or cantilever roof structure) for medium energy productions, not comparable in terms of the amount of produced kWs to those obtainable by photovoltaic power plants, said hanging structure being suited to be installed in urban districts, toll-gates, motorway servicing places, toll houses, service areas of motorways, parking lots associated with commercial or residential areas or the like, the hanging structure comprising:
- a foundation;
- at least one substantially vertical post anchored to said foundation,
- at least one tubular support element, that extends obliquely from the post;
- a substantially horizontal beam supported by said tubular support element;
- at least one photovoltaic panel connected to said horizontal beam.

The present hanging structure is characterized in that at a predetermined height on the wall of the post there are provided one or more tubular members, for performing a bayonet-type coupling with said tubular support element which supports the beam , and in that the post is manufactured with a steel of the same quality as that used to manufacture the tubular support elements or the tubular members for said bayonet-type coupling, said tubular members for the bayonet-type coupling being welded on the post using full-penetration welds.

Preferably, the photovoltaic panel follows the direction of the beam, while the axis of the beam can be tilted vertically with respect to the ground by an adjustable angle. Moreover, it is also possible to adjust the rotation angle (i.e. the tilt) of the panel around the beam axis.

Additionally, the direction of the photovoltaic panel (and therefore that of the beam) may be adjusted by selecting a rotation of the respective post relative to its foundation during installation. The details of this adjustment are provided in the description.

The dependent claims also contain the details of : a preferred embodiment of foundation (groundwork); the tilt adjustment system used to tilt the beam relative to the ground; a specific realisation of the connection between the beam and the photovoltaic panel(s). Contrary to the present invention, most conventional structures for supporting photovoltaic panels are arranged adjacent the ground level and for this reason these solutions cannot be proposed for solving the problems of the invention.

Besides, these conventional structures used to support photovoltaic panels are laid on wide, open areas, which are devoid of hindrances, thereby insuring the required orientation of such panels, while preventing at the same time the presence of 'shadow cones' (even of limited extent) that would affect or invalidate the overall operation of the power plant used to produce large amounts of energy.

The requirement of realising the panel structures of traditional photovoltaic power plants in open areas, implies remarkable costs due to the use of a considerable area for the sole purpose of installing these panels. The "payoff" for satisfying this requirement is the large amount of energy that can be produced.

On the contrary, the object of the present invention is to obtain average values of energy production and to input the generated energy into the electric energy supply network, preferably in the vicinity of the plant/structure itself.

To that end, for the production of the hanging structure it is preferred to use tubular sections, in whose interior electric cables may extend, for the transport of the electric energy generated by the photovoltaic panel first to the vertical post and then to the electric energy distribution network.

This solution insures safety and protection of the system from tampering and other acts of vandalism.

Additional advantages and features of the invention will result from its specific embodiments which are disclosed in that part of the description which refers to the drawings.

In general, the cantilever roof structure of the present invention is suited for the installation of photovoltaic panels in narrow places and therefore it is advantageous for realising shady areas in which parking lots or stopover places for persons or vehicles may be obtained.

It optimises the space necessary for the installation of the panels (with a resulting cost reduction), also by optimising (that is, by reducing) the size of the components which support the panels themselves whose function is at the same time to shade the underlying area.

Moreover, the present hanging structure, including its panels which entirely reflect its static and resistance-related features, is of a "general" type as regards the dimension of its resistant elements, in order to insure their compatibility of installation in almost all of the Italian territory by virtue of their capability of resisting to loads according to current regulations regarding loads and overloads.

Since the hanging structure or cantilever roof structure according to the present invention requires the panel to be mounted at a considerable height above the ground, it must satisfy specific requirements regarding safety/stability, to eliminate the risk of injuring persons/vehicles who/which may temporarily stop below the same.

The following detailed description will also consider these particular problems.

### Brief Description of Drawings

The present invention will now be described for illustrative and non-limitative purposes with reference to two specific embodiments, by way of a non-binding example of the present inventive concept, as shown in the annexed drawings in which:
FIGURE 1 is a front view, in partial cross-section, of the cantilever roof structure, or hanging (suspended) structure, supporting the photovoltaic panels, according to a first possible embodiment of the present invention;
FIGURE 2 is a side view, in partial-cross section, of the hanging structure supporting the photovoltaic panels, according to the first embodiment of the present invention;
FIGURE 3 is a front view, in partial cross-section, of the suspended structure supporting the photovoltaic panels, according to a second possible embodiment of the present invention;
FIGURE 4 is a side view, in partial-cross section, of the suspended structure supporting the photovoltaic panels, according to the second embodiment of the present invention;
FIGURE 5 shows the foundation block (plinth) together with the basket with ties, located at the base of the post;
FIGURE 6 is a plan view partly in cross-section of the base of the post, illustrating the base plate of the post, which is fixed on the upper part of the basket with ties;
FIGURE 7 is a detailed side view of the post upper part, of the intermediate element, and of the tilt adjustment system for adjusting the tilt of the beam (third position = intermediate position);
FIGURE 7a shows a detail of the articulated adjustment system of the beam (first, external position);
FIGURE 7b shows a detail of the articulated adjustment system of the beam (second, external position);
FIGURE 8 shows the upper end of a tubular element acting as beam support, comprising at its tip a connection plate allowing connection to the panel-supporting beam;
FIGURE 9 shows another detail of the tilt adjustment system, specifically of the double-plate flange, for adjusting the tilt of the panel-supporting beam;
FIGURE 10 shows a detail of the attachment of the photovoltaic panel on the beam;
FIGURES 11, 11a, 11b show three possible tilts of the photovoltaic panel around the axis of the panel-supporting beam (corresponding to a positive, null, or negative tilt, respectively);
FIGURE 12 shows the possibility of mounting the base plate (anchor plate) of the post according to different rotational angles relative to the counter-plate carrying the basket with ties, thereby obtaining different orientations of the panels as shown in Figs. 13, 13a, 13b;
FIGURES 13, 13a, 13b show various possible horizontal orientations of the photovoltaic panels, obtainable during installation by a rotation of the post relative to its foundation.

### Detailed Description of Some Preferred Embodiments of the Invention

A description will be given of the present invention with regard to its details of realisation, by referring to the drawings and two possible embodiments thereof, only for the purpose of allowing a skilled man to understand how to put the present invention into practice. These embodiments should not, therefore, be interpreted in a binding or limitative way. For example, the tilt adjustment system for adjusting the panels' tilt, could be realised in a way different from the described one.

Generally speaking, the hanging structure, or cantilever roof structure, has at least one vertical element or post 2 (though their number could be greater) which is connected to a foundation (groundwork) 1 of reinforced concrete.

At least one intermediate element 3, serving as support (here a tubular support 3), on which a respective tension rod 8 acts, is connected/restrained (in a way discussed below) to said post 2.

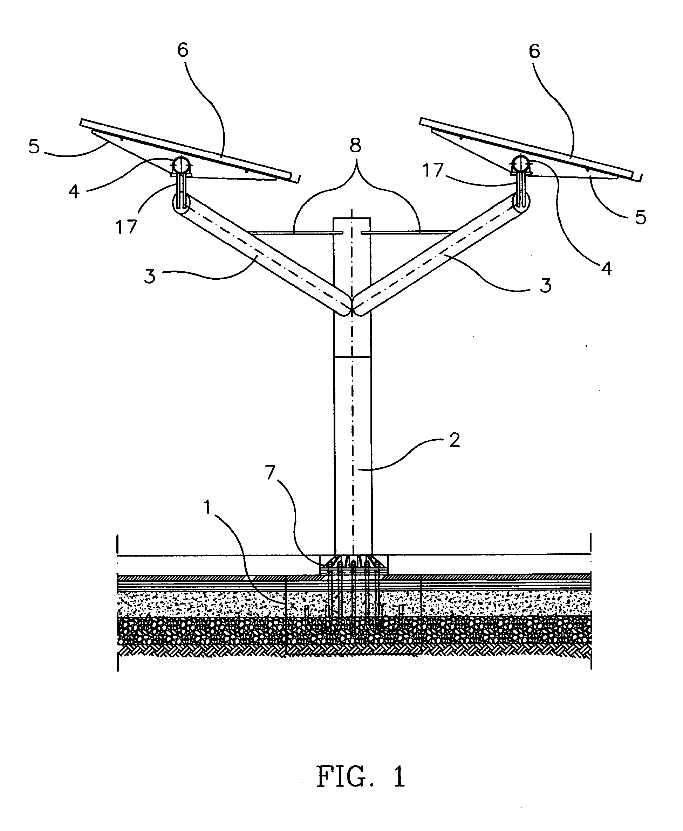

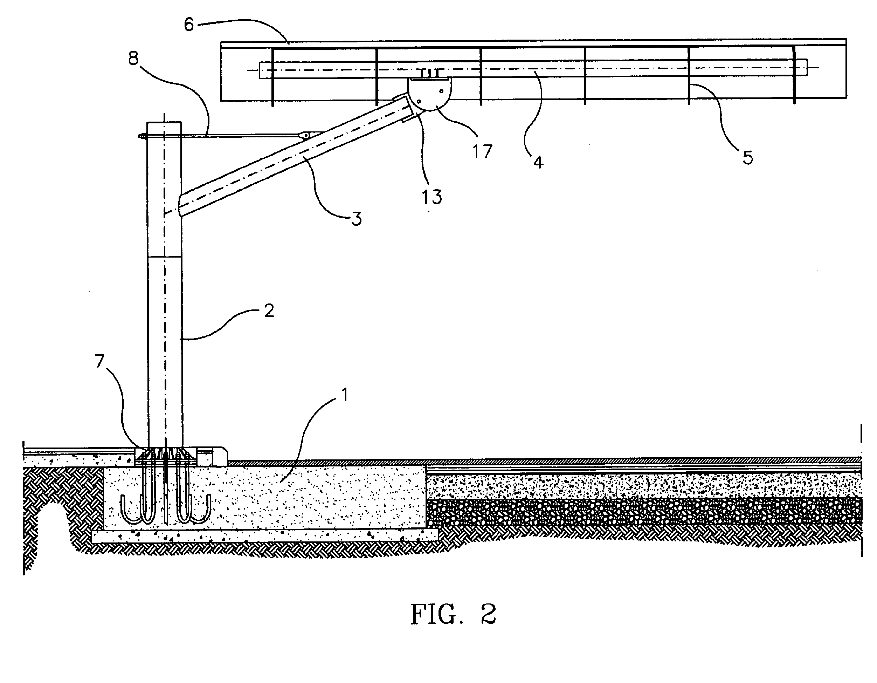

Figures 1 and 2 - first embodiment - show two tubular supports 3 which hold respective panel-supporting beams 4. In this case, the post 2 supports two cantilevered photovoltaic panels 6.

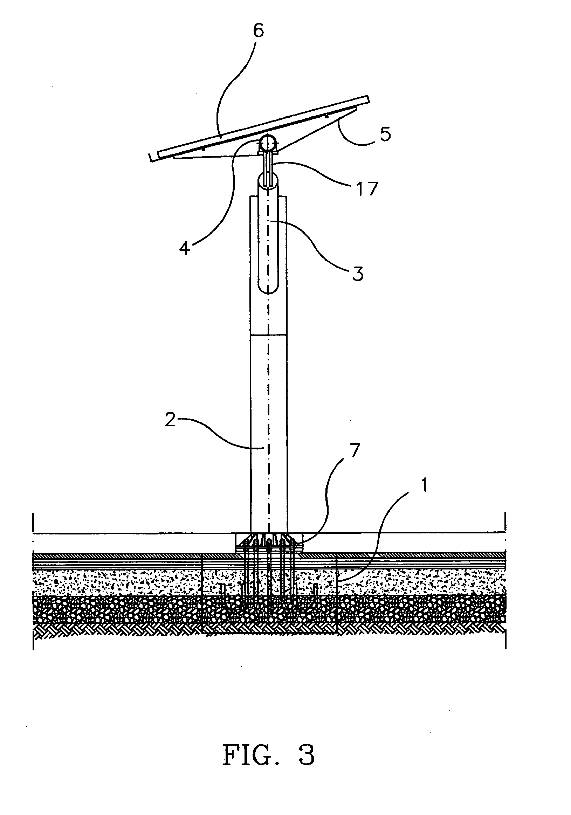

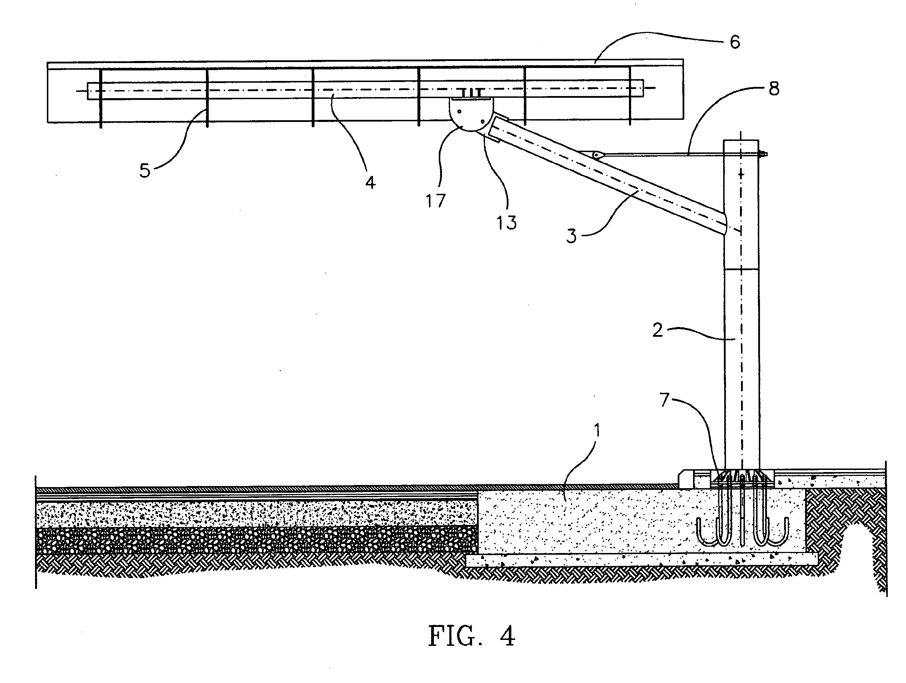

In contrast, in the second embodiment of the invention, shown in Figures 3 and 4, there is a single tubular support 3 restrained to the post 2, supporting a corresponding beam 4 and a photovoltaic panel 6.

However, obviously each beam 4 could also support several separate photovoltaic panels 6, 6, ... , which then would be smaller.

The tubular support 3 is connected to the horizontal member or beam 4 - serving as support for the panels - , by means of a bolted flange 17 formed by two plates, the connection being embodied by a simple "shelf system" (or "bracket system") described below, which allows an adjustment of the respective beam 4 in a vertical plane.

The photovoltaic panels 6 held by the beams 4 produce electric energy and, at the same time, they shade the underlying parking lots used by cars or the like.

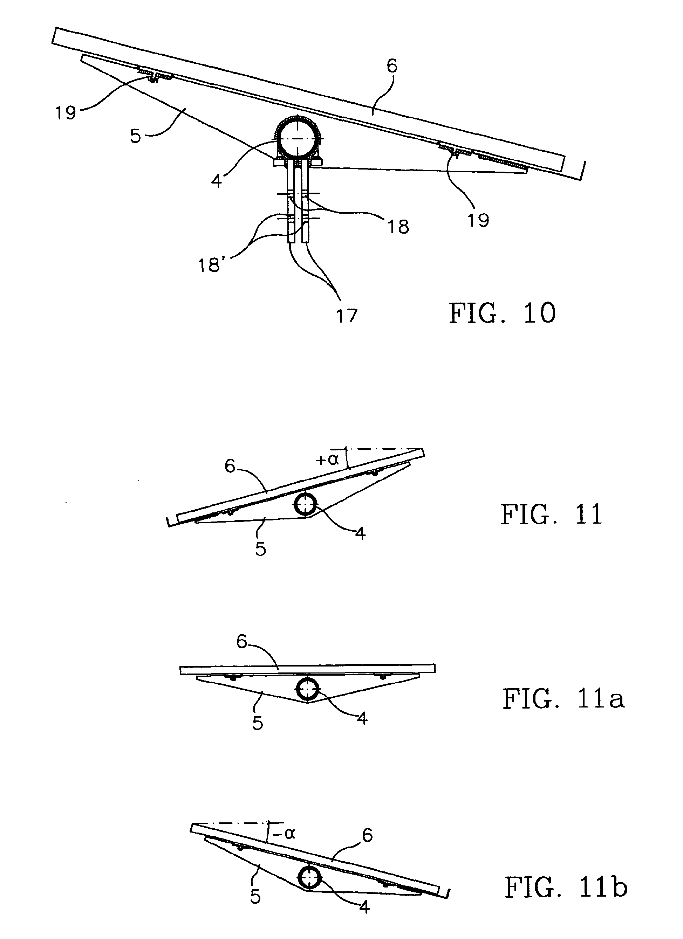

The panels 6 are supported by ribs 5 formed of solid steel plates welded to the corresponding beam 4, while section bars 19, to which said panels 6 are riveted (see Fig. 10), act as load-distributing elements and extend between said ribs. The section bars 19 are in turn fixed /welded in a desired position, within apposite slots or grooves realised previously in the ribs 5; the latter are preferably equidistant and may in turn be welded to the beam 4 with different tilts (see Figs. 11, 11a and 11b), in order to orient the photovoltaic panel 6 in a desired manner.

All elements consisting of metallic manufactured articles are preferably subjected to hot galvanisation (zinc plating) treatment.

Details concerning the manufacturing process will be put in evidence below, these details applying in the same way to both preferred embodiments of the present invention (see Figs. 1 + 2, and Figs. 3 + 4).

### Foundation (groundwork)

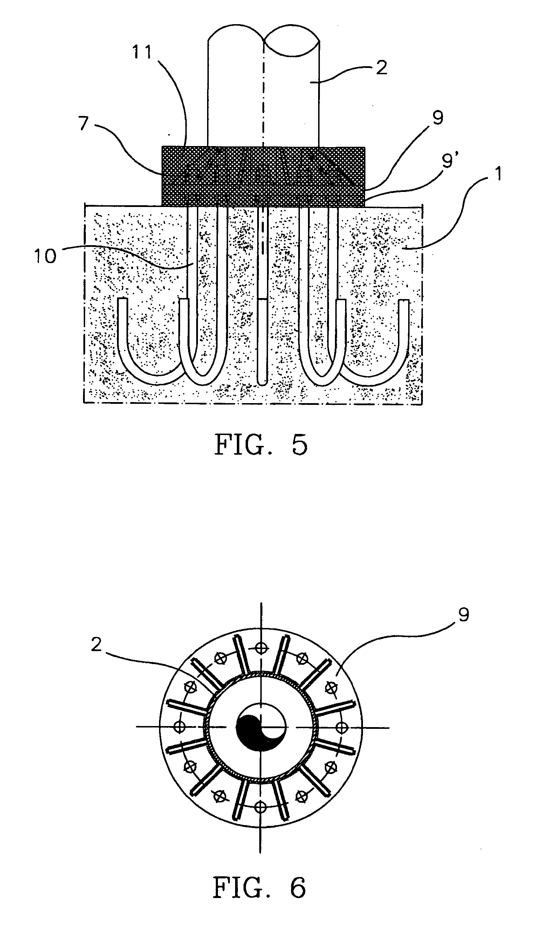

With specific reference to Figs. 5 and 6, the (direct) foundation block 1 is entirely made of reinforced concrete cast during the installation work, and which may include appropriate additives and accelerating agents. The size of the foundation block, in plan view, may vary according to the structural typology adopted in the elevation (that is whether there is a single beam (Figs. 3 + 4) or several beams (Figs. 1 + 2)), if there is only one post or several posts 2, and also depending on the mechanical parameters of the foundation earth, that is , the soil (to be identified beforehand by an apposite geological study). The metallic structure of the cantilever roof of the present invention is anchored by means of an apposite "basket" 7 having (hook-shaped) ties 10, to the casting 1 of the foundation plinth, while being buried in the same.

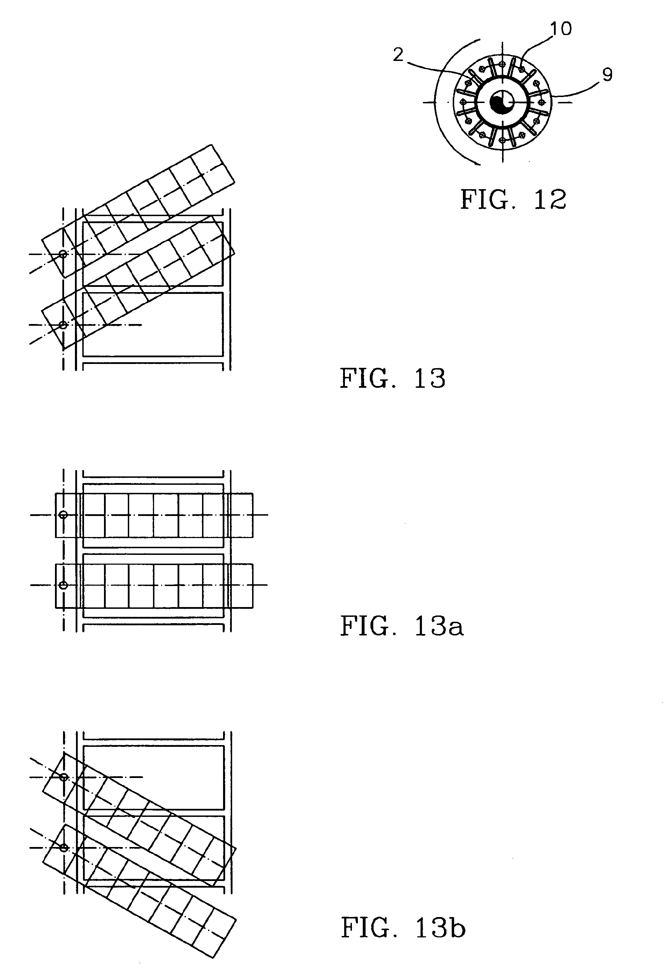

Actually, the basket 7 includes a base plate 9 of the post 2, which is bolted in turn to an underlying counter-plate 9'. Specifically, the upper ends of the (hook-shaped) ties 10 extend beyond (above) this underlying plate 9', and these ties are on the one hand buried in the concrete 1, and on the other, at their upper ends, they traverse holes made in the base plate 9 and are locked/fastened by nuts. By adjusting the relative rotational angle of these plates 9, 9', one with respect to the other, it is possible to obtain different horizontal orientations of the beams 4 and - consequently - of the panels 6, as schematically shown in Figures 12, 13, 13a and 13b. Thus, in the preferred embodiment the basket 7 is conceived in a manner to allow appropriate adjustments in order to obtain the definitive geometrical configuration for the whole assembly. At the end of the assembling operations (see Fig. 5), the region located above the foundation block, or plinth 1, above these plates 9, 9', is covered/filled with a rheoplastic concrete 11 having the following functions: a supporting base for the post 2, increasing the rigidity to flexion and torsion of the assembly, and protection of the ties 10 from corrosion.

### Post (vertical element)

The post 2 (which may be more than one in number, associated to a single foundation block 1 or to multiple foundation blocks 1 spatially separated from each other in order to form a plurality of cantilever roofs), in its preferred, non-limitative embodiment, consists of a tubular element of appropriate diameter, e.g. 273 mm, and having a thickness of e.g. 8 mm and a length of 2645 mm (or 3345 mm), which is assembled by means of full-penetration welds from two initially separate sections of the same tubular element (the above are obviously only exemplificative numbers).

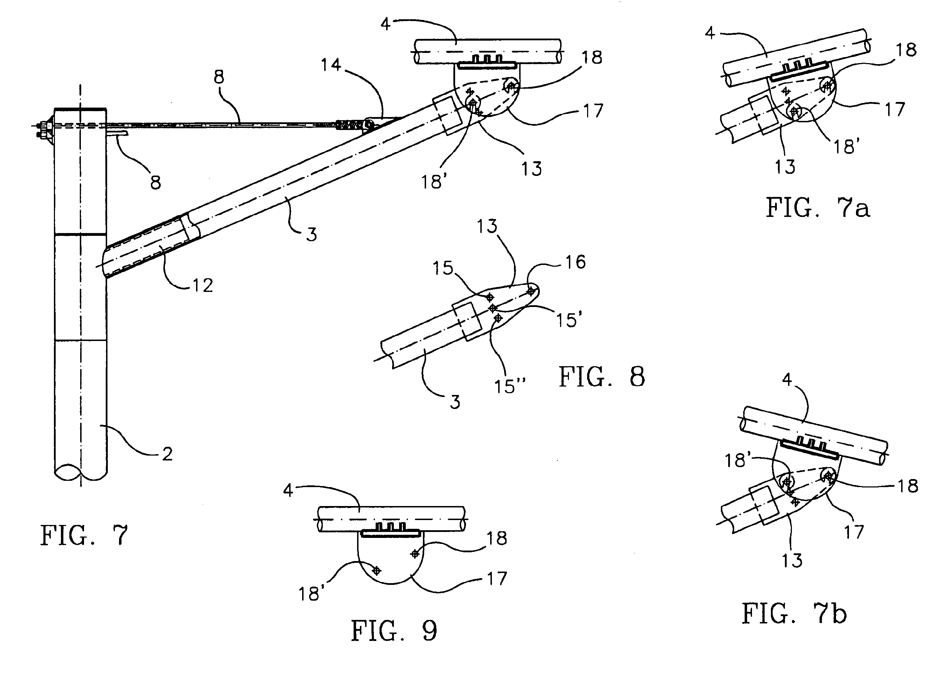

The tubular element or post 2 includes the abovementioned base plate (anchoring plate) 9 at its lower end, which is inserted on the ties 10. The base plate 9, serving to anchor said post 2, has an appropriate thickness and is stiffened by means of triangular, metallic gusset plates, which are welded using angular seams. The modular nature of the present hanging structure (see claim 1), is given, in particular, in that at a selected vertical distance below the upper end of the post 2 (which depends on the model of hanging structure), there are one or more tubular members 12 (see Fig. 7) for a bayonet-type coupling with respective tubular support element 3, acting as support(s) for the corresponding beam 4.

Said tubular members 12 for the bayonet-type coupling of a respective tubular support element 3 acting as support for a beam 4, are made of the same steel quality used to manufacture the post 2, and their length is generally equal to 450mm, their diameter is 139.7mm, while their thickness is 6mm (these figures being obviously non-binding); moreover, they are connected by means of full-penetration welds. In the upper part of post 2, there are - depending on the structure model - one or more holes of about 30 mm in diameter, these holes receiving a respective tension bar 8 (see Fig. 7) which is tensioned after assembling and is anchored to the rear side of post 2; these post-tensioned bars 8 are preferably made of a steel subjected to a hot galvanisation treatment and having a high yield stress. Each bar 8 is used to "pull" a respective tubular element 3 acting as support for a respective beam 4.

### Tubular element, acting as beam support

The tubular element(s) 3 acting as support(s) for the beam(s) 4 is (are) realised in the form of a tubular section of generally 159 mm in diameter and 8 mm of thickness, connected by means of a bayonet coupling on the respective bayonet-coupling-tubular-member 12 which is already provided on column 2; after this coupling it is welded by means of an angular seam. Each tubular support 3 has an axis-aligned eye 14 used to connect a respective post-tensioned bar 8, while at its upper extremity it is provided with a connection plate 13 used for connecting the beam 4.

This connection plate 13 forms a component of the tilt adjustment system of the beam 4, used to adjust the tilt in the vertical plane containing the geometric axis of the beam 4.

In the second, preferred embodiment of the invention, corresponding to figures 3 and 4, the connection plate 13 is flat-shaped, as shown in the sheets of drawings annexed to the present patent application. One end of the connection plate 13 is inserted (and then welded) inside diametrically opposite slits obtained at the upper extremity of the tubular support element 3 along its (geometric) generating lines, as follows from the figures. That portion of the connection plate 13 which projects out of the tubular support element 3 is provided with four holes 15, 15', 15", 16, three of which (15, 15', 15") are located on an arc of a circle whose centre coincides with the hole 16.

The bolted flange 17, which is formed of two plates (see e.g. Fig. 3), is upwardly welded (cfr. Fig. 9) to the beam 4, while on its lower side it receives said connection plate 13 between its flanks formed each of an individual plate. More specifically, two holes 18 (corresponding to the "adjustment fulcrum"), each provided on a respective flank (plate) of the opposite flanks (plates) of the flange 17, are aligned with said hole 16 on the connection plate 13, while the other two holes 18' present on the respective plates (flanks) of the flange 17, are aligned with one of the holes 15, 15', and 15". A first connection bolt is introduced into the three holes 18, 16, 18 (tilt adjustment fulcrum), whereas a second bolt is inserted in the holes 18', 15', 18' (zero-tilt position, shown in Fig. 7: beam 4 in horizontal position), or in the holes 18', 15", 18' (positive-inclination position, shown in Fig. 7a), or alternatively in the aligned holes 18', 15, 18' (negative-tilt position, shown in Fig. 7b).

Summing up, the tilt of each beam 4 can be adjusted in a vertical plane as a function of the angle of exposure one wishes to obtain for the panels 6 (connection node at beam 4 - tubular element 3).

It should be noted that in the embodiment shown in Fig. 1 and Fig. 2, which comprises two intermediate elements (tubular support elements) 3, if it is desired to orient the beams 4 along parallel directions (according to the most natural arrangement which is also shown in these figures 1 and 2), then the two respective connection plates 13 of the two corresponding beams 4 cannot be flat-shaped; instead, they will include two flat portions connected (e.g. welded) together in such a way to form an angle, suited to align these beams along mutually parallel directions. One of said flat portions of each connection plate 13 will be inserted, as usual, in a corresponding tubular element 3, while the other one, forming an angle with the first portion, will be bolted to the flange 17 of the respective articulated connection.

### Beam (horizontal support member)

The words "horizontal support member" used as synonym for the beam 4 in the present description, are intended to mean only that the beam 4 is "substantially horizontal", since the latter - as already discussed above - may clearly be tilted with respect to a position which is perfectly horizontal to the ground.

This beam 4 represents the main structural member, on which the various photovoltaic panels 6 are mounted by the interposition of a system of supporting ribs 5. The beam 4 may generally be formed of a tubular member, having a diameter of 127 mm and a thickness of 8 mm, on which, at preferably equal distances - depending on the typology of the adopted panel - there are provided the ribs 5 made of triangular, steel plates of about 10 mm of thickness (obviously these dimensional figures are merely illustrative and non-binding). Section bars 19 are mounted on these triangular plates, while the frames of the photovoltaic panels 6 are fixed on these section bars by means of appropriate rivets (not shown) or equivalent connection means.

The beams 4, the intermediate supports 3, and the posts 2, all form monolithic parts preferably interconnected by welding - for structural simplicity -, in order to insure a monolithic nature of the cantilever roof structure of the present invention and a quick installation (other types of connections are however possible).

As already described, the hanging structure is preferably made of steel. Anyway, its various parts must have physical and mechanical features insuring optimum safety (appropriate parameters of tensile and yield stress, resilience, etc.). The welds should for instance be accurately checked by means of tests complying with current safety rules (X-ray tests, ultrasound tests, etc.).

All these measures are necessary since the structure of the present invention is not simply a structure used for the production of energy but a hanging structure utilized to shade a parking lot or the like, and for this reason it is required to insure that people/animals/cars which stay or move under this structure will not be injured or damaged.

The hanging structure according to the present invention also satisfies the following requirements:
- it can support accidental/additional loads (caused e.g. by snow and wind), and a minimum number of photovoltaic panels (5-6 for each hanging element) appropriately anchored to the structure;
- it has a minimum free space allowing access for vehicles and persons below the "hanging beam", that is, the horizontal element;
- it can be oriented appropriately (as described above) both under the planimetrical viewpoint (horizontal angle) and the altimetrical viewpoint (vertical angle), at least with regard to its part used as panel support;
- each individual structure produces a peak value of 1 kW (net yield of the panels, which depends on their technical features as well as on the possibility of insuring optimum orientation and positioning).

## Claims

1. A hanging structure for medium energy productions, not comparable in terms of the amount of produced kWs to those obtainable by photovoltaic power plants, said hanging structure being suited to be installed within urban districts, toll-gates, motorway servicing places, toll houses, service areas of motorways, parking lots associated with commercial or residential areas or the like, the hanging structure comprising:
- a foundation (1);
- at least one substantially vertical post (2) anchored in said foundation (1);
- at least one tubular support element (3), that extends obliquely from the post (2);
- a substantially horizontal beam (4) supported by said tubular support element (3);
- at least one photovoltaic panel (6) connected to said beam (4),
**characterised in that** at a predetermined height on the wall of the post (2) there are provided one or more tubular members (12), for performing a bayonet-type coupling with said tubular support element (3) which supports the beam (4), and **in that** the post (2) is manufactured with a steel of the same quality as that used to manufacture the tubular support elements (3) or the tubular members (12) for said bayonet-type coupling, said tubular members (12) for the bayonet-type coupling being welded on the post (2) using full-penetration welds.

2. A hanging structure according to claim 1 comprising, at the base of the post (2), a basket (7) of ties (10) buried in the reinforced concrete of the foundation block (1).

3. A hanging structure according to claim 1 or 2, wherein the photovoltaic panel (6) follows the direction of the beam (4), while at the connection between the beam (4) and the intermediate element (3) there is provided a tilt adjustment system (13, 17; 15, 15', 15", 16, 18, 18') for adjusting the vertical inclination of the axis of the beam (4) relative to the ground.

4. A hanging structure according to claims 1, 2 or 3, wherein a rotation angle or tilt of the photovoltaic panel (6) around the axis of the beam (4) is adjustable.

5. A hanging structure according to anyone of the preceding claims, wherein the direction of said at least one photovoltaic panel (6), and consequently also that of said beams (4), are adjustable by selecting beforehand, during the installation, the rotational angle of a base plate (9) of the respective post (2) relative to a counter-plate (9') forming a basket (7) with ties (10) buried in the foundation block (1).

6. A hanging structure according to anyone of the preceding claims, wherein at least part of its main components (2, 3, 4) including the post (2), the tubular support element (3), and the beam (4), are formed of metallic tubular sections, preferably of steel subjected to a hot galvanisation treatment.

7. A hanging structure according to claim 6, wherein electric cables extend inside said metallic tubular sections, or only inside some of them.

8. A hanging structure according to anyone of the preceding claims, wherein each tubular support element (3) forms a tubular supporting element (3) of a respective beam (4), which is connected to the respective post (2) through eye-and-eyebolt means (14) and an elongate tension means (8).

9. A hanging structure according to claim 8, wherein said elongate tension means (8) is a steel cable or a steel rod.

10. A hanging structure according to claim 3, wherein said tilt adjustment system (13, 17; 15, 15', 15", 16, 18, 18') for adjusting the vertical inclination of the axis of the beam (4) relative to the ground includes a connection plate (13), for connecting the beam (4) to said tubular support element (3), connection plate being inserted at the tip of the tubular support element (3) at its upper end, and a double-plate flange (17), which receives said connection plate (13) and is welded at the lower side of the beam (4); the two plates of the flange (17), and the connection plate (13), having holes (18, 18; 16) acting as a rotation fulcrum, and additional holes (18', 18'; 15, 15', 15") for adjusting the tilt of the beam (4) in a vertical plane.

11. A hanging structure according to claim 4, wherein the photovoltaic panels (6) are fixed, for instance riveted, on load-distributing section bars (19), while the latter are fixed, preferably welded, to ribs (5) which are welded in turn to the panel-supporting beam (4) with a predetermined tilt (α), which is either positive, negative or null.

## Patentansprüche

1. Hängende Struktur für mittlere Energie-Produktionen, nicht vergleichbar in Bezug auf die Menge der produzierten kWs mit solchen, die durch Photovoltaik-Kraftwerke erhaltbar sind, wobei die hängende Struktur dazu geeignet ist, innerhalb von Stadtbezirken, Mauttoren, Autobahn-Serviceorten, Mauthäusern, Servicebereichen von Autobahnen, Parkplätzen, die mit kommerziellen Gebieten oder Wohngebieten oder dergleichen verbunden sind, installiert zu sein, wobei die hängende Struktur aufweist:
- ein Fundament (1);
- mindestens eine im Wesentlichen vertikale Säule (2), die in dem Fundament (1) verankert ist;
- mindestens ein rohrförmiges Stützelement (3), das sich schräg von der Säule (2) erstreckt;
- einen in Wesentlichen horizontalen Träger (4), der durch das rohrförmige Stützelement (3) gestützt wird;
- mindestens ein Photovoltaik-Panel (6), das mit dem Träger (4) verbunden ist,
**dadurch gekennzeichnet, dass** auf einer vorbestimmten Höhe an der Wand der Säule (2) ein oder mehrere rohrförmige Teile (12) vorgesehen sind zum Durchführen einer bajonettartigen Verbindung mit dem rohrförmigen Stützelement (3), das den Träger (4) stützt, und dadurch, dass die Säule (2) hergestellt ist aus einem Stahl der gleichen Qualität wie der, der zum Herstellen der rohrförmigen Stützelemente (3) oder der rohrförmigen Teile (12) für die bajonettartige Verbindung verwendet wurde, wobei die rohrförmigen Teile (12) für die bajonettartige Verbindung an die Säule (2) unter Verwendung von Einbrandschweißnähten geschweißt sind.

2. hängende Struktur nach Anspruch 1, aufweisend an dem Fußpunkt der Säule (2) einen Korb (7) von Bändern (10), der in dem verstärkten Beton des Fundamentblocks (1) eingebettet ist.

3. Hängende Struktur nach Anspruch 1 oder 2, wobei das Photovoltaik-Panel (6) der Richtung des Trägers (4) folgt, während an der Verbindung zwischen dem Träger (4) und dem Zwischenelement (3) ein Neigungs-Verstell-System (13, 17; 15, 15', 16, 18, 18') bereitgestellt wird zum Verstellen der vertikalen Steigung der Achse des Trägers (4) relativ zu dem Untergrund.

4. Hängende Struktur nach den Ansprüchen 1, 2 oder 3, wobei ein Rotationswinkel oder eine Neigung des Photovoltaik-Panels (6) um die Achse des Trägers (4) einstellbar ist.

5. Hängende Struktur nach einem der vorhergehenden Ansprüche, wobei die Richtung des mindestens einen Photovoltaik-Panels (6) und infolgedessen auch die der Träger (4) während der Installation einstellbar sind durch vorheriges Auswählen des Rotationswinkels einer Grundplatte (9) der jeweiligen Säule (2) relativ zu einer Gegenplatte (9'), die einen Korb (7) mit Bändern (10) bildet, der in dem Fundamentblock (1) eingebettet ist.

6. Hängende Struktur nach einem der vorhergehenden Ansprüche, wobei mindestens ein Teil ihrer Hauptkomponenten (2, 3, 4) einschließlich der Säule (2), des rohrförmigen Stützelements (3) und des Trägers (4) aus metallischen rohrförmigen Abschnitten gebildet sind, vorzugsweise aus Stahl, der einer Feuerverzinkungs-Behandlung unterworfen wurde.

7. Hängende Struktur nach Anspruch 6, wobei sich elektrische Kabel innerhalb der metallischen rohrförmigen Abschnitte erstrecken oder nur innerhalb einiger von ihnen.

8. Hängende Struktur nach einem der vorhergehenden Ansprüche, wobei jedes der rohrförmigen Stützelemente (3) ein rohrförmiges Stützelement (3) eines jeweiligen Trägers (4) bildet, der mit der jeweiligen Säule (2) durch Augen- und Augenschrauben-Mittel (14) und einem länglichen Spannmittel (8) verbunden ist.

9. Hängende Struktur nach Anspruch 8, wobei das längliche Spannmittel (8) ein Stahlkabel oder eine Stahlstange ist.

10. Hängende Struktur nach Anspruch 3, wobei das Neigungs-Verstell-System (13, 17; 15, 15', 15", 16, 18, 18') zum Verstellen der vertikalen Steigung der Achse des Trägers (4) relativ zu dem Untergrund eine Verbindungsplatte (13) einschließt zum Verbinden des Trägers (4) mit dem rohrförmigen Stützelement (3), wobei die Verbindungsplatte an der Spitze des rohrförmigen Stützelements (3) an seinem oberen Ende eingebracht ist, und ein Doppelplatten-Flasch (17), der die Verbindungsplatte (13) aufnimmt und der an der unteren Seite des Trägers (4) angeschweißt ist; wobei die zwei Platten des Flansches (17) und die Verbindungsplatte (13) Öffnungen (18, 18'; 16), die als Rotations-Drehpunkt wirken, und zusätzliche Öffnungen (18', 18'; 15, 15', 15") zum Verstellen der Neigung des Trägers (4) in einer vertikalen Ebene aufweisen.

11. Hängende Struktur nach Anspruch 4, wobei die Photovoltaik-Panels (6) an Last-Verteilungs-Abschnitts-Holmen (19) befestigt sind, beispielsweise genietet, während die letzteren befestigt sind, vorzugsweise geschweißt, an Rippen (5), die wiederum an den panel-unterstützenden Träger (4) mit einer vorbestimmten Neigung (α), die entweder positiv, negativ oder Null ist, angeschweißt sind.

## Revendications

1. Structure suspendue pour des productions d'énergie moyennes, non comparables en termes de quantité de kW produits à celles qui peuvent être obtenues par des installations photovoltaïques, ladite structure suspendue étant apte à être installée dans des districts urbains, des barrières de péage, des endroits de desserte autoroutiers, des postes de péage, des aires de service d'autoroutes, des parkings associés à des zones commerciales ou résidentielles ou autres, la structure suspendue comprenant :
- une base (1) ;
- au moins un poteau (2) globalement vertical ancré dans la base (1) ;
- au moins un élément de support tubulaire (3) qui s'étend en biais à partir du poteau (2) ;
- une poutrelle (4) globalement horizontale (4) supportée par l'élément de support tubulaire (3) ;
- au moins un panneau photovoltaïque (6) relié à la poutrelle (4),
**caractérisée en ce qu'**il est prévu à une hauteur prédéterminée, sur la paroi du poteau (2), un ou plusieurs éléments tubulaires (12) pour réaliser un accouplement du type à baïonnette avec l'élément de support tubulaire (3) qui supporte la poutrelle (4), et **en ce que** le poteau (2) est fabriqué avec un acier de la même qualité que celui qui est utilisé pour fabriquer les éléments de support tubulaires (3) ou les éléments tubulaires (12) pour l'accouplement du type à baïonnette, les éléments tubulaires (12) pour l'accouplement du type à baïonnette étant soudés sur le poteau (2) à l'aide de soudures traversées.

2. Structure suspendue selon la revendication 1, comprenant, à la base du poteau (2), un panier (7) d'attaches (10) noyées dans le béton armé du bloc de base (1).

3. Structure suspendue selon la revendication 1 ou 2, étant précisé que le panneau photovoltaïque (6) suit la direction de la poutrelle (4), tandis qu'il est prévu à la jonction entre la poutrelle (4) et l'élément intermédiaire (3) un système de réglage d'inclinaison (13, 17 ; 15, 15', 15", 16, 18, 18') pour régler l'inclinaison verticale de l'axe de la poutrelle (4) par rapport au sol.

4. Structure suspendue selon les revendications 1, 2 ou 3, étant précisé qu'un angle de rotation ou une inclinaison du panneau photovoltaïque (6) sur l'axe de la poutrelle (4) est réglable.

5. Structure suspendue selon l'une quelconque des revendications précédentes, étant précisé que la direction du ou des panneaux photovoltaïques (6) et aussi, par conséquent, celle des poutrelles (4) sont réglables grâce à la sélection préalable, pendant l'installation, de l'angle de rotation d'une plaque de base (9) du poteau (2) respectif par rapport à une contreplaque (9') formant un panier (7) avec des attaches (10) noyées dans le bloc de base (1).

6. Structure suspendue selon l'une quelconque des revendications précédentes, étant précisé qu'une partie au moins de ses principaux composants (2, 3, 4) comprenant le poteau (2), l'élément de support tubulaire (3) et la poutrelle (4) se composent de sections tubulaires métalliques, de préférence en acier soumis un traitement de galvanisation à chaud.

7. Structure suspendue selon la revendication 6, étant précisé que des câbles électriques s'étendent à l'intérieur des sections tubulaires métalliques, ou à l'intérieur de certaines d'entre elles seulement.

8. Structure suspendue selon l'une quelconque des revendications précédentes, étant précisé que chaque élément de support tubulaire (3) forme un élément de support tubulaire (3) d'une poutrelle (4) respective qui est reliée au poteau (2) respectif par des moyens à oeil et boulon à oeil (14) et par des moyens de tension allongés (8).

9. Structure suspendue selon la revendication 8, étant précisé que les moyens de tension allongés (8) sont constitués par un câble en acier ou une barre d'acier.

10. Structure suspendue selon la revendication 3, étant précisé que le système de réglage d'inclinaison (13, 17 ; 15, 15', 15", 16, 18, 18') pour régler l'inclinaison verticale de l'axe de la poutrelle (4) par rapport au sol comprend une plaque de liaison (13) pour relier la poutrelle (4) à l'élément de support tubulaire (3), la plaque de liaison étant insérée à la pointe de l'élément de support tubulaire (3), à son extrémité supérieure, et une bride à double plaque (17) qui reçoit la plaque de liaison (13) et qui est soudée au côté inférieur de la poutrelle (4) ; les deux plaques de la bride (17) et la plaque de liaison (13) présentant des trous (18, 18 ; 16) qui agissent comme points de rotation, et des trous supplémentaires (18', 18' ; 15, 15', 15") pour régler l'inclinaison de la poutrelle (4) dans un plan vertical.

11. Structure suspendue selon la revendication 4, étant précisé que les panneaux photovoltaïques (6) sont fixés, par exemple rivetés, sur des profilés de répartition de charge (19), tandis que ces derniers sont fixés, de préférence soudés, à des nervures (5) qui sont elles-mêmes soudées à la poutrelle de support de panneau (4) avec une inclinaison (a) prédéterminée, qui est positive, négative ou nulle.
